# EUROPÄISCHE PATENTSCHRIFT

(11) **EP 4 183 033 B1**
(45) Veröffentlichungstag und Bekanntmachung des Hinweises auf die Patenterteilung: **25.09.2024**
(21) Anmeldenummer: 21769387.8
(22) Anmeldetag: 25.08.2021
(51) Int. Cl.: H02K 17/16, H02K 15/00, B33Y 80/00

(54) **AKTIVTEIL EINER ELEKTRISCHEN MASCHINE MIT GEDRUCKTEM LEITER**
ACTIVE PART OF AN ELECTRIC MACHINE WITH PRINTED CONDUCTOR
PARTIE ACTIVE D'UNE MACHINE ÉLECTRIQUE POURVUE DE CONDUCTEUR IMPRIMÉ

(30) Priorität: 31.08.2020 EP 20193655
(43) Veröffentlichungstag der Anmeldung: 24.05.2023
(73) Patentinhaber: Innomotics GmbH, 90441 Nürnberg (DE)
(72) Erfinder: BRACH, Karsten, 13589 Berlin (DE); JENSEN, Jens Dahl, 14050 Berlin (DE); RAUCH, Hartmut, 12203 Berlin (DE); SCHNECK, Jakob, 10245 Berlin (DE); STIER, Oliver, 12163 Berlin (DE)
(74) Vertreter: Siemens Patent Attorneys
(86) Internationale Anmeldenummer: PCT/EP2021/073442
(87) Internationale Veröffentlichungsnummer: WO 2022/043353

(56) Entgegenhaltungen:
- EP-A1- 3 288 159
- EP-A1- 3 301 794
- EP-A1- 3 493 371
- EP-A1- 3 518 398
- EP-A1- 3 576 256
- EP-A1- 3 595 146
- EP-A1- 3 618 232
- EP-A1- 3 629 452
- EP-B1- 2 333 133
- DE-A1- 102012 006 248
- DE-A1- 102018 208 409
- DE-C1- 19 919 899
- JP-A- 2014 108 006
- US-A1- 2011 175 484

## Beschreibung

Die Erfindung betrifft einen Aktivteil einer elektrischen Maschine und ein Verfahren zur Herstellung dessen.

Eine elektrische Maschine weist einen Stator und einen Rotor auf. Ist die elektrische Maschine eine Asynchronmaschine, ist im Betrieb der elektrischen Maschine sowohl der Stator wie auch der Rotor bestromt. Damit ist der Rotor auch ein Aktivteil der elektrischen Maschine, da dieser einen Kurzschlusskäfig aufweist, welcher Leiter aufweist, durch welchen im Betrieb der elektrischen Maschine elektrischer Strom fließt.

Der Rotor der elektrischen Maschine, also das Aktivteil der Asynchronmaschine welches sich im Betrieb dreht, ist im Betrieb Fliehkräften ausgesetzt. Leiter des Aktivteils, also insbesondere Leiter des Kurzschlusskäfigs sind so auszuführen bzw. zu konstruieren, dass diese den Fliehkräften standhalten. Ein spezifisches Problem besteht beispielsweise darin, eine Verbindung (bspw. zur Herstellung von Komponenten für elektrische Maschinen, wie zum Beispiel dem Rotor einer Asynchronmaschine als deren Aktivteil) unter Verwendung unterschiedlicher Materialien (bspw. Kuper / Eisen oder Kupfer / Stahl oder Eisen / Stahl) stabil auszuführen. Dies gelingt beispielsweise durch stoffschlüssige Verbindungen. Eine solche stoffschlüssige Verbindung wurde bisher bspw. für Käfigläufer von Asynchronmaschinen gefertigt. Diese Läufer erfordern kurzgeschlossene Rotorwicklungen, um ihre Funktion zu erfüllen. Der bestromte Stator induziert im Rotor Ströme, die mit dem Feld des Stators ein Drehmoment bewirken und so eine Last antreiben. Bei Hochdrehzahlantrieben ist der Rotor, aus Gründen der mechanischen Festigkeit, aus massivem, hochfestem Stahl mit integrierter Kurzschluss-Rotorwicklung. Zur Integration der Rotorwicklung werden zunächst Nuten für die Stäbe bzw. die Ringsegmente der Wicklung in den massiven Rotorballen gefräst bzw. gedreht und dort anschließend massive, vernickelte Kupferstäbe/-ringsegmente eingefügt. Durch die anschließende Anwendung eines isostatischen Heißpressverfahrens (HIP: Hot Isostatic Pressing) entsteht eine Diffusionszone zwischen dem Kupfer der Stäbe und dem Nickel der Beschichtung, sowie zwischen dem Nickel der Beschichtung und dem Stahl des massiven Rotors. Diese hochfeste Verbindung ist notwendig, um den Fliehkraft-Beanspruchungen bei höchsten Drehzahlen Stand zu halten. Der HIP-Prozess erfordert hohe Temperaturen und Drücke. Das beschriebene Verfahren ist sehr aufwendig und teuer.

EP 3 629 452 A1 beschreibt ein Verfahren zur Herstellung eines Rotors mittels eines thermischen Spritzverfahrens.

Eine Aufgabe der Erfindung ist es ein Aktivteil der elektrischen Maschine, insbesondere einen Rotor der elektrischen Maschine einfach und stabil auszuführen. Damit soll erreicht werden, dass das Aktivteil bei Rotation nicht zerstört wird. Eine Lösung der Aufgabe ergibt sich bei einem Aktivteil nach Anspruch 1. Eine weitere Lösung der Aufgabe ergibt sich bei einem Verfahren nach Anspruch 8. weitere Ausgestaltungen ergeben sich gemäß der Ansprüche 2 bis 7 und 9 bis 12.

Ein Aktivteil einer elektrischen Maschine, welches elektrische Leiter aufweist, weist elektrische Leiter auf, welche gedruckt sind. Die gedruckten elektrischen Leiter sind insbesondere additiv gedruckt. Das heißt, dass zum Druck der elektrischen Leiter ein additives Druckverfahren verwendet wird, verwendet ist bzw. verwendet wurde. Das Aktivteil der elektrischen Maschine ist insbesondere ein Rotor der elektrischen Maschine. Die elektrische Maschine ist insbesondere eine Asynchronmaschine. Der gedruckte elektrische Leiter ist insbesondere ein Leiter eines Kurzschlusskäfigs der Asynchronmaschine, wobei hier im Folgenden unter einem Druck, also etwas Gedrucktem, insbesondere auch ein additiver Druck zu verstehen ist. Der Druck ist also insbesondere ein 3D-Druck, wie z.B. Selektives Laserschmelzen (SLM), Selektives Lasersintern (SLS), Elektronenstrahlschmelzen (EBM), Laserauftragsschweißen (LMD), Kaltgasspritzen, etc. Zwischen den gedruckten elektrischen Leiter befindet sich ein Zwischenkörper. Die Zwischenkörper weisen eine zu den elektrischen Leitern unterschiedliche und geringere elektrische Leitfähigkeit auf. Der Zwischenkörper ist also insbesondere ein Isolator. Der Zwischenkörper isoliert insbesondere zwei benachbarte elektrische Leiter voneinander, wenn der Zwischenkörper zwischen den benachbarten elektrischen Leitern positioniert ist. Der Zwischenkörper besteht insbesondere aus einem isolierenden Material bzw. weist dieses zumindest auch auf. Durch das Drucken der elektrischen Leiter kann eine feste Verbindung hergestellt werden. Die gedruckten elektrischen Leiter weisen eine Längsausrichtung parallel zur Rotationsachse des Rotors auf. Die elektrische Maschine ist also insbesondere eine rotatorische elektrische Maschine, welche eine Rotationsachse aufweist. Aus einem Abstand zur Rotationsachse ergibt sich für den Rotor bzw. den Stator der elektrischen Maschine ein radialer Bezugsbereich. Bereiche bzw. Punkte von Rotor bzw. Stator der elektrischen Maschine weisen also einen radialen Bezug auf bzw. können bezüglich ihrer radialen Position bzw. Ausrichtung beschrieben sein. Die elektrische Maschine kann z.B. auch ein Linearmotor sein. Zum gedruckten elektrischen Leiter kann beispielsweise Kupfer und/oder Aluminium verwendet werden.

Die elektrischen Leiter sind insbesondere in Schichten, also schichtweise gedruckt (additiv gedruckt). Die Schichten erstrecken sich insbesondere längs der Drehachse der elektrischen Maschine, weisen einen Bogenabschnitt auf und weisen eine radiale Höhe auf, wobei der Radius jeweils einen Abstand von der Drehachse betrifft. Auch die Zwischenkörper sind insbesondere in Schichten, also schichtweise gedruckt (additiv gedruckt). Auch diese Schichten erstrecken sich insbesondere längs der Drehachse der elektrischen Maschine, weisen einen Bogenabschnitt auf und weisen eine radiale Höhe auf, wobei der Radius jeweils einen Abstand von der Drehachse betrifft.

In einer Ausgestaltung des Aktivteils erfolgt der additive Druck unterschiedlicher sich kontaktierender Materialien zeitversetzt. So wird ein Schichtaufbau erleichtert.

In einer Ausgestaltung des Aktivteils sind elektrische Leiter also gedruckt, wie auch Zwischenkörper zwischen den elektrischen Leitern gedruckt sind. Auch dies erhöht die Festigkeit. Insbesondere kann auch das Blechpaket ganz oder teilweise gedruckt sein.

In einer Ausgestaltung des Aktivteils sind die elektrischen Leiter symmetrisch über den Umfang des Rotors (Aktivteil) positioniert.

In einer Ausgestaltung des Aktivteils weist zumindest einer der elektrischen Leiter in einem Abschnitt einen Querschnitt auf, welcher sich mit zunehmendem Radius verjüngt. Der Radius betrifft dabei die Rotationsachse des Aktivteils (Rotors). Die elektrischen Leiter, wie auch die Zwischenkörper, weisen ein Volumen auf. Das Volumen ergibt sich insbesondere aus einer Länge, längs bzw. parallel zur Rotationsachse, einer Breite, die sich aus der Größe des eingenommenen Kreisabschnittes ergibt und einer Höhe, welche sich durch eine radiale Erstreckung ergibt. In einer Ausgestaltung des Aktivteils weist also zumindest einer der elektrischen Leiter in einem Abschnitt einen Querschnitt auf, welcher sich mit zunehmender Höhe verjüngt. Dabei vergrößert sich die Höhe mit zunehmendem radialem Abstand.

Verjüngt sich der Querschnitt radial nach außen kann der gedruckte elektrische Leiter doch angrenzende Zwischenkörper gehalten werden. Dies ergibt sich aus der geometrischen Form, wenn sich die Zwischenkörper in Umfangsrichtung jeweils an die elektrischen Leiter mittelbar oder unmittelbar anschließend. Ein mittelbares Anschließen ergibt sich beispielsweise dadurch, wenn sich zwischen den elektrischen Leiter und dem Zwischenkörper noch eine Zwischenschicht befindet. Dies ist beispielsweise aus einem Material, welches Mittel aufweist. Die Zwischenkörper sind beispielsweise aus einem Material, welches Stahl und/oder Eisen aufweist. Verjüngt sich der Querschnitt eines gedruckten elektrischen Leiters, so verjüngt sich dieser insbesondere in einer Tangentialrichtung.

Der Querschnitt ergibt sich aus einer stirnseitigen Sicht auf die elektrischen Leiter bzw. die Zwischenkörper.

In einer Ausgestaltung des Aktivteils nimmt der Querschnitt in seiner Tangentialausdehnung radial nach außen abwechselnd zu und ab bzw. ab und zu. Dies trifft ebenso den Querschnitt bezüglich der tangentialen Ausdehnung der Zwischenkörper. Dabei ergibt es sich in einer Ausgestaltung, dass dort, wo sich der Querschnitt des gedruckten elektrischen Leiters in einer radialen Richtung verjüngt sich in entsprechender Weise der Querschnitt des Zwischenkörpers vergrößert und umgekehrt. Damit ergibt sich insbesondere eine Verzahnung von elektrischen Leitern und Zwischenkörpern, wobei auch die Zwischenkörper gedruckt ausgeführt sein können.

In einer Ausgestaltung des Aktivteils ist in dieses folglich derart ausführbar, dass zumindest einer der elektrischen Leiter eine Vielzahl von Abschnitten mit Querschnitten aufweist, welche sich mit zunehmendem Radius verjüngen. Ein Aktivteil ist also insbesondere derart ausgestaltbar, dass zumindest einer der elektrischen Leiter eine Vielzahl von Abschnitten mit Querschnitten aufweist, welche sich mit zunehmender Höhe verjüngen.

Dabei entsprechen die Abschnitte beispielsweise zumindest teilweise Abschnitte eines Drucks der elektrischen Leiter, wobei die elektrischen Leiter abwechselnd zu den Zwischenkörper radial zunehmend aufgedruckt werden.

In einer Ausgestaltung des Aktivteils ist zwischen zumindest einem der gedruckten elektrischen Leiter und dem gedruckten Zwischenkörper eine dreidimensionale Struktur ausgebildet. Ein Aktivteil ist also insbesondere derart ausgestaltbar, dass zwischen zumindest einem der gedruckten elektrischen Leiter und zumindest einem der gedruckten Zwischenkörper eine dreidimensionale Struktur ausgebildet ist.

Diese dreidimensionale Struktur ist beispielsweise im Querschnitt gezackt oder gewellt. So ergibt sich eine Formpassung zwischen den Zwischenkörper und den elektrischen Leitern, sodass diese besser in Position gehalten werden können, auch wenn Kräfte radial nach Außen auf diese wirken.

In einer Ausgestaltung des Aktivteils weist die dreidimensionale Struktur in einem Querschnitt also ein Zackenmuster oder ein Wellenmuster auf.

In einer Ausgestaltung des Aktivteils differiert die elektrische Leitfähigkeit der elektrischen Leiter radial. Ein Aktivteil ist also insbesondere derart ausgestaltbar, dass die elektrische Leitfähigkeit der elektrischen Leiter abhängig von der Höhe differiert. Die Höhe ergibt sich aus der radialen Erstreckung. Die elektrische Leitfähigkeit ist insbesondere in Bereichen größer, welche einen größeren Radius, d. h. einen größeren Abstand von der Rotationsachse, aufweisen. So kann der Widerstand der elektrischen Leiter eingestellt werden und auch der Skinneffekt berücksichtigt werden. Beispielsweise kann auch die elektrische Leitfähigkeit radial nach außen abnehmen.

In einer Ausgestaltung des Aktivteils ist zwischen zumindest einem der elektrischen Leiter und zumindest einem der gedruckten Zwischenkörper eine Kontaktschicht, welche insbesondere Nickel aufweist. Die Kontaktschicht ist beispielsweise gedruckt oder aufgesprüht. Durch die Kontaktschicht ist es insbesondere möglich eine Diffusion bezüglich des elektrischen Leiters und/oder bezüglich des Zwischenkörpers zu befördern. So ist es möglich die Verbindung zwischen elektrischem Leiter und Zwischenkörper zu verbessern. Dies ist insbesondere bei hohen auftretenden Fliehkräften vorteilhaft.

In einer Ausgestaltung des Aktivteils weisen die elektrischen Leiter und/oder die insbesondere gedruckten Zwischenkörper zwischen zwei der elektrischen Leiter, Schichten auf, welche radial dort enden bzw. beginnen, an welchen die Dicke eines der elektrischen Leiter, bzw. Zwischenkörpers ein lokales Minimum oder Maximum aufweist. Die Schichtung ergibt sich daraus, dass die elektrischen Leiter bzw. die Zwischenkörper radial nach außen schichtweise aufgedruckt werden. Die radiale Dicke der elektrischen Leiter und der Zwischenkörper vergrö-βert sich also alternierend (abwechselnd). Damit ist es möglich die Wellenform bzw. die Zackenform herzustellen, welche zusätzlichen Halt gibt.

In einem Verfahren zur Herstellung eines Aktivteils, insbesondere eines Rotors mit einem Kurzschlusskäfig, einer elektrischen Maschine, werden die elektrische Leiter gedruckt, wobei zwischen elektrischen Leitern ein Zwischenkörper gedruckt wird, wobei zwischen dem Druck zumindest eines elektrischen Leiters und eines Zwischenkörper abgewechselt wird. So ergibt sich ein schichtweiser Aufbau von elektrischen Leitern bzw. Zwischenkörper. Die elektrischen Leiter werden also insbesondere schichtweise gedruckt. Auch die Zwischenkörper werden insbesondere schichtweise gedruckt. Die Schichten von elektrischen Leitern und Zwischenkörpern werden insbesondere alternierend gedruckt. Bei dem Druck handelt es sich insbesondere um einen additiven Druck. Der additive Druck wird oft auch als 3D-Druck bezeichnet. Der Kurzschlusskäfig des Aktivteils (Rotors) der Asynchronmaschine ist insbesondere additiv so zu fertigen, dass eine stoffschlüssige Verbindung zwischen den Materialien entsteht. Der Stoffschluss ist notwendig, um hohe Festigkeiten im Interface der Verbindung, und somit zwischen den Stoffen, gewähren zu können. Dies gelingt beispielsweise mittels eines Kaltgasspritzverfahrens. Mittels des Kaltgasspritzverfahrens lässt sich elektrisch leitendes Material wie Kupfer oder Aluminium aber auch magnetisierbares Material wie Eisen drucken. Der Kurzschlusskäfig der Asynchronmaschine kann also teilweise oder vollständig mittels eines additiven Druckverfahrens wie das "Kaltgasspritzen" hergestellt werden. Dazu wird der Leiterwerkstoff (bspw. Kupfer oder Aluminium) für die Wicklung und ein weichmagnetischer Werkstoff (bspw. FeSi2,9) für die Zähne schichtweise so auf eine Welle gedruckt, dass die Leiter und die Zähne parallel aufgebaut werden. Zusätzlich wird zum Beispiel parallel dazu zwischen elektrischem Leiter und Zwischenkörper, also insbesondere zwischen Leiter-, Zahn-und/oder Wellenwerkstoff eine im Vergleich sehr dünne Schicht (<= 300 pm) eines dritten Materials bspw. Nickel gedruckt und/oder durch Aufdampfen, etc. aufgebracht. Diese zusätzliche Schicht (im Folgenden auch Diffusionsschicht oder Kontaktschicht genannt), dient der Ausbildung einer Diffusionszone. Durch diese Kontaktschicht ergibt sich eine verbesserte Diffusion, also eine verbesserte Diffusionszone, welche die Bindung zwischen den angrenzenden Materialien erhöht bzw. verbessert. Der Zahn ist ein Beispiel für einen Zwischenkörper zwischen den elektrischen Leitern, welche kurzgeschlossene Wicklungen ausbilden. In einer möglichen anschließenden Wärmebehandlung (bspw. 6h bei 400°C) bildet sich dann insbesondere zwischen Leiterwerkstoff und Diffusionsschicht, zwischen Diffusionsschicht und weichmagnetischem Werkstoff sowie zwischen Diffusionsschicht und Stahl des massiven Rotors eine Diffusionszone und somit eine hochfeste Verbindung zwischen den unterschiedlichen Werkstoffen aus.

Ggf. kann es aus prozesstechnischen- und / oder Genauigkeitsgründen notwendig sein, zwischen den additiv aufgebauten Werkstoffen eine subtraktive Zwischenbearbeitung durchzuführen. Das beschriebene Verfahren bzw. die beschriebenen Verfahren sind nicht ausschließlich auf Asynchronmaschinen mit massiven Rotoren beschränkt. Rotoren können beispielsweise auch Teil massiv ausgebildet werden.

In einer Ausgestaltung des Verfahrens wird in einem Verfahrensschritt ein erster elektrischer Leiter und ein zweiter benachbarter elektrischer Leiter gedruckt, wobei deren Breite abnimmt, wobei in einem nachfolgenden Verfahrensschritt der Zwischenkörper zwischen dem ersten elektrischen Leiter und dem zweiten elektrischen Leiter gedruckt wird, wobei dessen Breite zunimmt. So ergeben sich unterschiedliche Dicken der Querschnitte der gedruckten Elemente.

In einer Ausgestaltung des Verfahrens sind die elektrischen Leiter und/oder die Zwischenkörper auf eine Wellenkörper gedruckt. Diese ist insbesondere derart massiv aufgebaut, dass er von auftretenden Fliehkräften unbeeinflusst ist.

In einer Ausgestaltung des Verfahrens wird zwischen einem Druck zumindest eines Teils eines der elektrischen Leiter, welche ein erster Druckgegenstand sind und dem Druck zumindest eines Teils der Zwischenkörper, welche ein zweiter Druckgegenstand sind, derart abgewechselt, dass sich vor einem Wechsel ein radialer Dickenzuwachs des elektrischen Leiters oder des Zwischenkörpers ergibt der zwischen größer gleich 50 % und kleiner gleich 200 % des darauf folgenden radialen Dickenzuwachses des jeweils anderen Druckgegenstandes ist. Der radiale Dickenzuwachs kann auch als Höhenzuwachs bezeichnet werden. Die Höhe ergibt sich aus der Differenz unterschiedlicher radialer Abstände des gedruckten Materials von der Drehachse.

Die beschriebene Methode birgt eine Vereinfachung der Fertigung und eine deutliche Erhöhung des Automatisierungsgrads (>80% möglich) gegenüber dem bestehenden Füge-/HIP-Verfahren. Darüber hinaus impliziert sie die Möglichkeit individuelle Läufergeometrie, angepasst auf spezielle Anforderungen des Kunden (Rotorstab-Geometrien) zu realisieren, die mit herkömmlichen Methoden nicht oder nur mit äußerst hohem Aufwand fertigbar sind. Zudem können einem Rotorstab, also einem elektrischen Leiter des Aktivteils, lokal besondere elektrische Materialeigenschaften, wie z.B. unterschiedliche elektrische Leitfähigkeiten gegeben werden.

In einer Ausgestaltung des Verfahrens überschreitet beim Drucken die Differenz einer ersten Höhe der Schichten der elektrischen Leiter und einer zweiten Höhe der Schichten des angrenzenden Zwischenkörper maximal zwei Schichten nicht. Insbesondere ist die Differenz benachbarter Schichten nur eine Schicht. Das bedeutet, dass die Differenz insbesondere nur die Höhe einer Schicht hat.

Im Folgenden wird die Erfindung beispielhaft anhand von Figuren näher dargestellt und erläutert. Die in den Figuren gezeigten Merkmale können auch zu neuen Ausführungsformen kombiniert werden, ohne die Erfindung zu verlassen. Gleiche Bezugszeichen bezeichnen gleichartige Elemente. Es zeigen:
- FIG 1: eine elektrische Maschine;
- FIG 2: Nuten;
- FIG 3: Nutenformen;
- FIG 4: eine erste Form von gedruckten elektrischen Leitern;
- FIG 5: eine zweite Form von gedruckten elektrischen Leitern.
- FIG 6 bis FIG 9: eine erste Abfolge eines Druckvorgangs und
- FIG 10 bis FIG 13: eine zweite Abfolge eines Druckvorgangs.

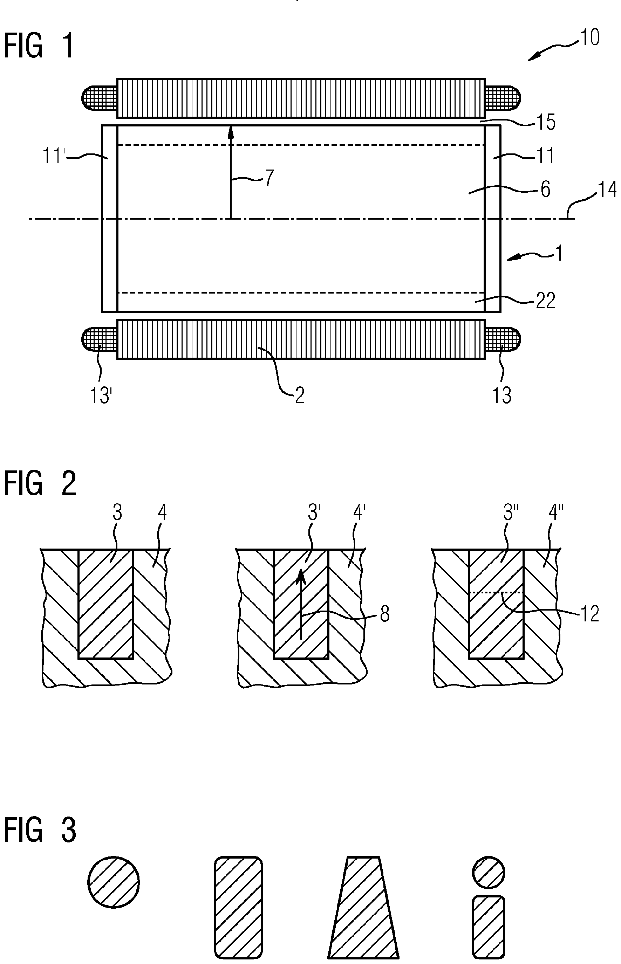

Die Darstellung nach Figur 1 zeigt eine elektrische Maschine 10, welche ein Aktivteil 1 und einen Stator 2 aufweist. In der vorliegenden Figur ist das Aktivteil 1 ein Rotor der elektrischen Maschine 10. In einer anderen Darstellung kann der Rotor als erstes Aktivteil und der Stator als zweites Aktivteil bezeichnet werden. Der Stator 2 weist Wicklungen mit Wickelköpfen 13 auf. Der Rotor, also im vorliegenden Beispiel das Aktivteil 1, ist ein Käfigläufer. Zwischen dem Stator und dem Rotor befindet sich ein Luftspalt 15. Das Aktivteil 1 weist einen ersten Kurzschlussring 11 und einen zweiten Kurzschlussring 11'. Das Aktivteil 1 ist um eine Rotationsachse 14 drehbar gelagert. Der Kurzschlusskäfig weist elektrische Leiter auf, welche in einer Druckschicht 22 liegen. Die elektrischen Leiter sind auf einen Wellenkörper 6 gedruckt. Das Aktivteil 1 weist eine radiale Ausdehnung mit dem Radius 7 auf. Die Druckschicht 22 befindet sich in einem radial äu-βeren Bereich des Aktivteils 1. Die elektrischen Leiter des Kurzschlusskäfigs sind in Figur 1 nicht explizit gezeigt, verlaufen aber in einer axialen Richtung in etwa parallel zur Rotationsachse 14.

Die Darstellung nach Figur 2 zeigt verschiedene Ausgestaltungen von elektrischen Leitern 3,3',3" in Nuten. Figur 2 zeigt einen elektrischen Leiter 3, mit einer konstanten Kupferlegierung. Dies ist für einen Anlauf der elektrischen Maschine ohne besondere Anforderungen geeignet. Figur 2 zeigt auch einen elektrischen Leiter 3' bei welchen durch einen Pfeil 8 angedeutet ist, dass sich radial nach außen die Leitfähigkeit reduziert. Dies ist beispielsweise durch eine Legierung mit CuSi erreichbar. Höhere Leitfähigkeiten sind beispielsweise durch eine Legierung E-Cu erzielbar. Mit einer Änderung der Leitfähigkeit kann auf erhöhte Anforderungen bezüglich des Anlaufes der elektrischen Maschine reagiert werden. Der Übergang der Legierung muss nicht zwingend stetig sein. Möglich ist beispielsweise auch eine sprunghafte Änderung der Leitfähigkeit, wie dies im elektrischen Leiter 3" durch die gepunktete Linie 12 symbolisiert ist.

Die Darstellung nach Figur 3 zeigt verschiedene Querschnittsformen elektrischer Leiter. In Figur 2 ist ein rechteckiger Querschnitt gewählt. In Figur 3 sind von links nach rechts folgende Querschnitte dargestellt: Rundstab-Querschnitt, Hochstab-Querschnitt, Keilstab-Querschnitt und Doppelstab-Querschnitt mit Anlauf- und Betriebskäfig. Mit dem Coldspray Verfahren lassen sich unterschiedliche Standard Stabformen mit lokal unterschiedlicher elektrischer Leitfähigkeit realisieren.

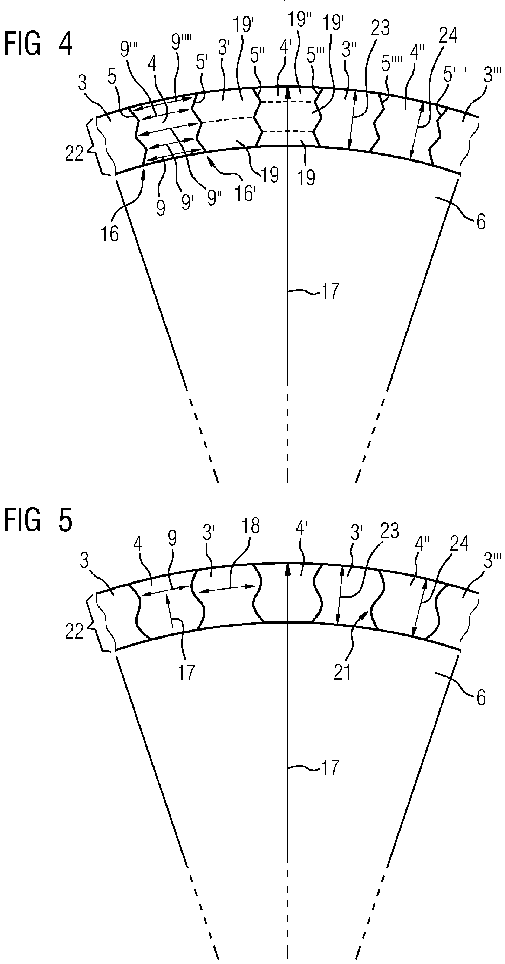

Die Darstellung nach Figur 4 zeigt in einem Tortenstück artigen Ausschnitt des Aktivteils in einem stirnseitigen Querschnitt die Positionierung der elektrischen Leiter und Zwischenstücke. Zwischen den elektrischen Leitern 3,3',3",3‴ befinden sich die Zwischenkörper 4,4',4",4‴. Die elektrischen Leiter weisen Schichten auf, wobei in der Figur 4 nur für den elektrischen Leiter 3' die Schichten 19 und 19` exemplarisch gezeigt sind, um die Übersichtlichkeit nicht zu gefährden. Auch die Zwischenkörper weisen Schichten auf, wobei in der Figur 4 nur für den Zwischenkörper 3' die Schichten 19, 19` und 19" gezeigt sind, um die Übersichtlichkeit nicht zu gefährden. Elektrische Leiter, wie auch Zwischenkörper, weisen eine radiale Dicke auf. Diese radiale Dicke kann auch als Höhe bezeichnet werden. In der Figur 4 sind beispielhaft die Höhe 23 für den elektrischen Leiter 3" und die Höhe 24 für den Zwischenkörper 4" gezeigt.

Die elektrischen Leiter weisen insbesondere Kupfer auf. Die Zwischenkörper weisen insbesondere Eisen und/oder Stahl auf. Beide sind gedruckt. Zwischen den elektrischen Leitern und den Zwischenkörper befinden sich Kontaktschichten 5,5',5",5‴, welche insbesondere Nickel aufweisen. Die Kontaktschichten weisen ein Zackenmuster 16,16' auf. Die elektrischen Leiter und die Zwischenkörper sind auf einem Wellenkörper gedruckt. Gedruckt wird von Innen nach Außen, was durch die radiale Richtung 17 verdeutlicht ist. Nach au-βen wechselt die Breite 9,9',9",9‴ der elektrischen Leiter in Umfangsrichtung. Alternierend dazu ändert sich auch die Breite der Zwischenkörper in gleicher radialer Position. Durch die Zackenform ergibt sich innerhalb einer Druckschicht 22 ein besonders guter Halt.

Die Darstellung gemäß Figur 5 zeigt in ähnlicher Weise wie Figur 4 den Querschnitt eines Ausschnitts eines Aktivteils, wobei der Grenzbereich zwischen den elektrischen Leitern und den Zwischenkörper nicht gezeigt ist, sondern wellenförmig verläuft.

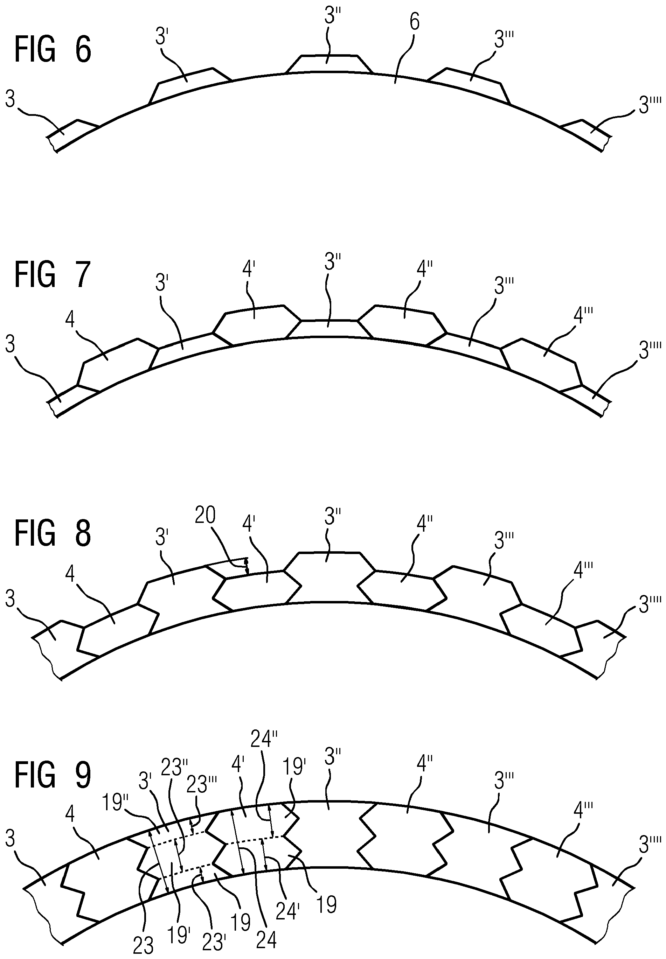

Die Darstellung gemäß der Figuren 6 bis 9 zeigt die Abfolge von Druckvorgängen. In einem ersten Schritt wird eine Schicht der elektrischen Leiter 3,3',3",3‴ auf den Wellenkörper 6 gedruckt. Diese elektrischen Leiter sind voneinander beabstandet. In einem nachfolgenden Schritt werden Schichten der Zwischenkörper 4,4',4",4‴ gedruckt, wobei sich diese radial nach außen über die erste Schicht der elektrischen Leiter ergeben. Gemäß Figur 8 werden in einem weiteren Schritt dann wieder die elektrischen Leiter schichtweise gedruckt, sodass sich auch diese radial nach außen über die Zwischenkörper erheben. Somit ergeben sich Stufen 20. In weiteren Schritten, welche in Figur 9 gezeigt sind, werden dann zunächst die Zwischenkörper weiter radial nach außen gedruckt bis dann anschließend die elektrischen Leiter derart nach außen gedruckt werden, dass es keine Stufen mehr gibt. Durch dieses schrittweise Vorgehen bilden sich Schichten 19, 19' aus. Auch die Schichten 19, 19' und 19" weisen radiale Dicken, also Höhen auf. In Figur 9 sind entsprechend beispielhaft die Höhen 23', 23" und 23‴ bzw. 24' und 24" für die entsprechenden Schichten eingezeichnet.

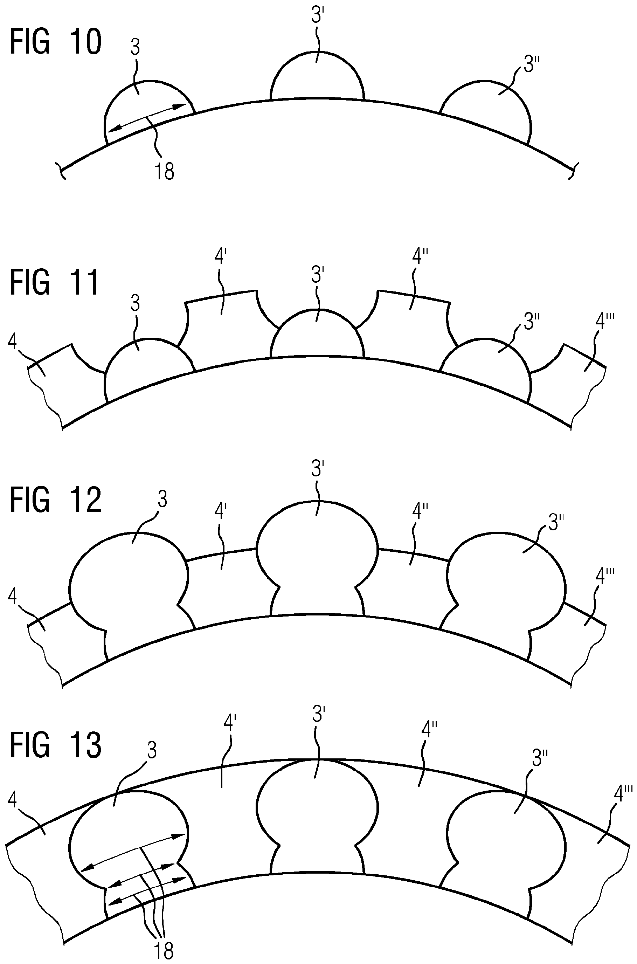

Die Darstellung gemäß der Figuren 10 bis 13 zeigt die Abfolge von Druckvorgängen, entsprechend der bereits in den Figuren 6 bis 9 gezeigten Abfolge. Im Unterschied dazu haben die elektrischen Leiter eine rundliche Form und geben wieder wie elektrische Leiter und Zwischenkörper durch ihre Form miteinander verbunden werden können, um Fliehkräfte aufzunehmen. Dabei ist gezeigt, dass sich auch hier die Breite 18 eines ausgebildeten elektrischen Leiters radial nach außen abwechselnd ändert, also einmal größer wird dann wieder kleiner und wieder größer bzw. umgekehrt.

## Patentansprüche

1. Aktivteil (1) einer elektrischen Maschine (10), welches elektrische Leiter (3,3',3",3‴) aufweist, wobei die elektrischen Leiter (3,3',3",3‴) additiv gedruckt sind, wobei zwischen elektrischen Leitern (3,3',3",3‴) ein Zwischenkörper (4,4',4",4‴) ist, wobei der Zwischenkörper (4,4',4",4‴) additiv gedruckt ist, wobei die elektrischen Leiter (3,3',3",3‴) in Schichten (19,19') gedruckt sind und wobei die Zwischenkörper (4,4',4",4‴) in Schichten gedruckt sind (19,19'), wobei die elektrischen Leiter (3,3',3",3‴) abwechselnd zu dem Zwischenkörper (4,4',4",4‴) radial zunehmend aufgedruckt sind, wobei zwischen zumindest einem der elektrischen Leiter (3,3',3",3‴) und zumindest einem der gedruckten Zwischenkörper (4,4',4",4‴) eine Kontaktschicht (5,5',5",5‴) eines dritten Materials aufgebracht ist, **dadurch gekennzeichnet dass** die Kontaktschicht weniger oder gleich 300 um dick aufgebracht ist, wobei mittels dieser Schicht und einer Wärmebehandlung eine Diffusionszone ausgebildet ist.

2. Aktivteil (1) nach Anspruch 1, wobei zumindest einer der elektrischen Leiter (3,3',3",3‴) in einem Abschnitt einen Querschnitt aufweist, welcher sich mit zunehmender radialer Höhe verjüngt.

3. Aktivteil (1) nach Anspruch 1 oder 2, wobei zumindest einer der elektrischen Leiter (3,3',3",3‴) eine Vielzahl von Abschnitten mit Querschnitten aufweist, welche sich mit zunehmender radialer Höhe verjüngen.

4. Aktivteil (1) nach einem der Ansprüche 1 bis 3, wobei zwischen zumindest einem der gedruckten elektrischen Leiter (3,3',3",3‴) und zumindest einem der gedruckten Zwischenkörper (4,4',4",4‴) eine dreidimensionale Struktur (5) ausgebildet ist.

5. Aktivteil (1) nach Anspruch 4, wobei die dreidimensionale Struktur (5) in einem Querschnitt ein Zackenmuster (16,16') oder ein Wellenmuster aufweist.

6. Aktivteil (1) nach einem der Ansprüche 1 bis 5, wobei die elektrische Leitfähigkeit der elektrischen Leiter (3,3',3",3‴) abhängig von der radialen Höhe differiert.

7. Aktivteil (1) nach einem der Ansprüche 1 bis 6, wobei die Kontaktschicht (5,5',5",5‴) Nickel aufweist.

8. Verfahren zur Herstellung eines Aktivteils (1) einer elektrischen Maschine, wobei elektrische Leiter (3,3',3",3‴) additiv gedruckt werden, wobei zwischen elektrischen Leitern (3,3',3",3‴) ein Zwischenkörper (4,4',4",4‴) gedruckt wird, wobei zwischen dem Druck zumindest eines elektrischen Leiters (3,3',3",3‴) und eines Zwischenkörper (4,4',4",4‴) abgewechselt wird, wobei die elektrischen Leiter (3,3',3",3‴) schichtweise gedruckt werden und wobei die Zwischenkörper (4,4',4",4‴) schichtweise gedruckt werden, wobei die elektrischen Leiter (3,3',3",3‴) abwechselnd zu dem Zwischenkörper (4,4',4",4‴) radial zunehmend aufgedruckt werden, wobei beim Drucken die Differenz einer ersten Höhe (23,23',23",23‴) der Schichten der elektrischen Leiter (3,3',3",3‴) und einer zweiten Höhe (24,24',24",24‴) der Schichten der angrenzenden Zwischenkörper (4,4',4",4‴) maximal zwei Schichten nicht überschreitet, insbesondere eine Schicht nicht überschreitet, wobei zwischen zumindest einem der elektrischen Leiter (3,3',3",3‴) und zumindest einem der gedruckten Zwischenkörper (4,4',4",4‴) eine Kontaktschicht (5,5',5",5‴) eines dritten Materials aufgebracht ist, **dadurch gekennzeichnet dass** die Kontaktschicht weniger oder gleich 300 um dick aufgebracht ist, Z wobei mittels dieser Schicht und einer Wärmebehandlung eine Diffusionszone ausgebildet ist.

9. Verfahren nach Anspruch 8, wobei in einem Verfahrensschritt ein erster elektrischer Leiter (3') und ein zweiter benachbarter elektrischer Leiter (3") gedruckt werden, wobei deren Breite abnimmt, wobei in einem nachfolgenden Verfahrensschritt der Zwischenkörper zwischen dem ersten elektrischen Leiter (3') und dem zweiten elektrischen Leiter (3") gedruckt wird, wobei dessen Breite zunimmt.

10. Verfahren nach Anspruch 8 oder 9, wobei die elektrischen Leiter (3,3',3",3‴) und/oder die Zwischenkörper (4,4',4",4‴) auf eine Wellenkörper (6) gedruckt werden.

11. Verfahren nach einem der Ansprüche 8 bis 10, wobei zwischen einem Druck zumindest eines Teils eines der elektrischen Leiter (3,3',3",3‴), welche ein erster Druckgegenstand sind und dem Druck zumindest eines Teils der Zwischenkörper (4,4',4",4‴), welche ein zweiter Druckgegenstand sind, derart abgewechselt wird, das sich vor einem Wechsel ein radialer Höhenzuwachs des elektrischen Leiters (3,3',3",3‴) oder des Zwischenkörpers (4,4',4",4‴) ergibt der zwischen größer gleich 50 % und kleiner gleich 200 % des darauf folgenden Höhenzuwachses des jeweils anderen Druckgegenstandes ist.

12. Verfahren nach einem der Ansprüche 8 bis 11, wobei das Aktivteil (1) wärmebehandelt wird.

13. Verfahren nach einem der Ansprüche 8 bis 12, wobei ein Aktivteil (1) nach einem der Ansprüche 1 bis 7 hergestellt wird.

## Claims

1. Active part (1) of an electric machine (10), which has electrical conductors (3,3',3",3‴), wherein the electrical conductors (3,3',3",3‴) are additively printed, wherein an intermediate body (4,4',4",4‴) is between electrical conductors (3,3',3",3‴), wherein the intermediate body (4,4',4",4‴) is additively printed, wherein the electrical conductors (3,3',3",3‴) are printed in layers (19,19') and wherein the intermediate bodies (4,4',4",4‴) are printed in layers (19,19'), wherein the electrical conductors (3,3',3",3‴) are printed in a radially increasing manner, alternating with the intermediate bodies (4,4',4",4‴), wherein a contact layer (5,5',5",5‴) of a third material is applied between at least one of the electrical conductors (3,3',3",3‴) and at least one of the printed intermediate bodies (4,4',4",4‴), **characterised in that** the contact layer is applied with a thickness of less than or equal to 300 um, wherein a diffusion zone is embodied by means of this layer and a heat treatment.

2. Active part (1) according to claim 1, wherein at least one of the electrical conductors (3,3',3",3‴) in one section therefore has a cross-section which tapers as the radial height increases.

3. Active part (1) according to claim 1 or 2, wherein at least one of the electrical conductors (3,3',3",3‴) has a large number of sections with cross-sections that taper as the radial height increases.

4. Active part (1) according to one of claims 1 to 3, wherein a three-dimensional structure (5) is embodied between at least one of the printed electrical conductors (3,3',3",3‴) and at least one of the printed intermediate bodies (4,4',4",4‴).

5. Active part (1) according to claim 4, wherein the three-dimensional structure (5) has a jagged pattern (16,16') or an undulating pattern in a cross-section.

6. Active part (1) according to one of claims 1 to 5, wherein the electrical conductivity of the electrical conductors (3,3',3",3‴) differs as a function of the radial height.

7. Active part (1) according to one of claims 1 to 6, wherein the contact layer (5,5',5",5‴) features nickel.

8. Method for producing an active part (1) of an electric machine, wherein electrical conductors (3,3',3",3‴) are additively printed, wherein an intermediate body (4,4',4",4‴) is printed between electrical conductors (3,3',3",3‴), wherein there is an alternating change between the printing of at least one electrical conductor (3,3',3",3‴) and an intermediate body (4,4',4",4‴), wherein the electrical conductors (3,3',3",3‴) are printed layer by layer and wherein the intermediate bodies (4,4',4",4‴) are printed layer by layer, wherein the electrical conductors (3,3',3",3‴) are printed in a radially increasing manner, alternating with the intermediate bodies (4,4',4",4‴), wherein the difference between a first height (23,23',23",23‴) of the layers of the electrical conductors (3,3',3",3‴) and a second height of the layers (24,24',24",24‴) of the adjacent intermediate body (4,4',4",4‴) does not exceed at most two layers during printing, in particular does not exceed one layer, wherein a contact layer (5,5',5",5‴) of a third material is applied between at least one of the electrical conductors (3,3',3",3‴) and at least one of the printed intermediate bodies (4,4',4",4‴), **characterised in that** the contact layer is applied with a thickness of less than or equal to 300 um, wherein a diffusion zone is embodied by means of this layer and a heat treatment.

9. Method according to claim 8, wherein in one method step, a first electrical conductor (3') and a second adjacent electrical conductor (3") are printed, wherein the width thereof decreases, wherein in a following method step the intermediate body is printed between the first electrical conductor (3') and the second electrical conductor (3"), wherein the width thereof increases.

10. Method according to claim 8 or 9, wherein the electrical conductors (3,3',3",3‴) and/or the intermediate bodies (4,4',4",4‴) are printed onto a shaft body (6).

11. Method according to one of claims 8 to 10, wherein there is an alternating change between a printing of at least some of one of the electrical conductors (3,3',3",3‴) that are a first printed subject matter and the printing of at least some of the intermediate bodies (4,4',4",4‴) that are a second printed subject matter, in such a manner that before a change an increase in radial height of the electrical conductor (3,3',3",3‴) or the intermediate body (4,4',4",4‴) is produced, which is between greater than or equal to 50% and less than or equal to 200% of the following increase in height of the other printed subject matter in each case.

12. Method according to one of claims 8 to 11, wherein the active part (1) is heat treated.

13. Method according to one of claims 8 to 12, wherein an active part (1) according to one of claims 1 to 7 is produced.

## Revendications

1. Partie (1) active d'une machine (10) électrique, qui a des conducteurs (3, 3', 3", 3‴) électriques, dans laquelle les conducteurs (3, 3', 3", 3‴) électriques sont imprimés additivement, dans laquelle un corps (4, 4', 4", 4‴) intermédiaire est disposé entre des conducteurs (3, 3', 3", 3‴) électriques, dans laquelle le conducteur (4, 4', 4", 4‴) intermédiaire est imprimé additivement, dans laquelle les conducteurs (3, 3', 3", 3‴) électriques sont imprimés en couche (19, 19') et dans laquelle les corps (4, 4', 4", 4‴) intermédiaires sont imprimés (19, 19') en couche, dans laquelle les conducteurs (3, 3', 3", 3‴) électriques sont imprimés d'une manière croissante radialement en alternance au corps (4, 4 ', 4", 4‴) intermédiaire, dans laquelle entre au moins l'un des conducteurs (3, 3', 3", 3‴) électriques et au moins un corps (4, 4 ', 4", 4‴) intermédiaire imprimé est déposé une couche (5, 5', 5", 5‴) de contact d'un troisième matériau, **caractérisée en ce que** la couche de contact est déposée en une épaisseur inférieure ou égale à 300 µm, dans laquelle au moyen de cette couche et d'un traitement par la chaleur, il est constitué une zone de diffusion.

2. Partie (1) active suivant la revendication 1, dans laquelle au moins l'un des conducteurs (3, 3', 3'', 3''') électriques a dans une partie, une section transversale, qui se rétrécit au fur et à mesure que la hauteur croissante augmente.

3. Partie (1) active suivant la revendication 1 ou 2, dans laquelle au moins l'un des conducteurs (3, 3', 3'', 3''') électriques a une pluralité de parties ayant des sections transversales, qui se rétrécissent au fur et à mesure que la hauteur radiale augmente.

4. Partie (1) active suivant l'une des revendications 1 à 3, dans laquelle il est formé une structure (5) tridimensionnelle entre au moins l'un des conducteurs (3, 3', 3", 3‴) électriques imprimés et au moins l'un des corps (4, 4', 4'', 4''') intermédiaires imprimés.

5. Partie (1) active suivant la revendication 4, dans laquelle la structure (5) tridimensionnelle a, dans une section transversale, un motif (16, 16') dentelé ou un motif ondulé.

6. Partie (1) active suivant l'une des revendications 1 à 5, dans laquelle la conductivité électrique des conducteurs (3, 3', 3", 3‴) électriques diffère en fonction de la hauteur radiale.

7. Partie (1) active suivant l'une des revendications 1 à 6, dans laquelle la couche (5, 5', 5", 5‴) de contact comporte du nickel.

8. Procédé de fabrication d'une partie (1) active d'une machine électrique, dans lequel on imprime additivement des conducteurs (3, 3', 3", 3‴) électriques, dans lequel on imprime un corps (4, 4', 4", 4‴) intermédiaire entre des conducteurs (3, 3', 3", 3‴) électriques, dans lequel on alterne entre l'impression d'au moins un conducteur (3, 3', 3", 3‴) électrique et d'un corps (4, 4', 4", 4‴) intermédiaire, dans lequel on imprime couche par couche les conducteurs (3, 3', 3", 3‴) électriques et dans lequel on imprime couche par couche les corps (4, 4', 4", 4''') intermédiaires, dans lequel on imprime en augmentant radialement les corps (3, 3', 3'', 3‴ ) électriques en alternance avec les corps (4, 4', 4", 4‴) intermédiaires, dans lequel lorsque l'on imprime, la différence d'une première hauteur (23, 23', 23", 23‴) des couches des conducteurs (3, 3', 3", 3‴) électriques et d'une deuxième hauteur (24, 24', 24", 24‴) des couches des corps (4, 4', 4", 4‴) intermédiaires voisins, ne dépasse pas au maximum deux couches, en particulier ne dépasse pas une couche, dans lequel on dépose une troisième couche (5, 5', 5", 5‴) de contact en un troisième matériau entre au moins l'un des conducteurs (3, 3', 3", 3‴) électriques et au moins l'un des corps (4, 4', 4", 4‴) intermédiaires imprimés, **caractérisé en ce que** la couche de contact est déposée en une épaisseur inférieure ou égale à 300 µm, dans laquelle au moyen de cette couche et d'un traitement par la chaleur, il est constitué une zone de diffusion.

9. Procédé suivant la revendication 8, dans lequel dans un stade du procédé, on imprime un premier conducteur (3') électrique et un deuxième conducteur (3") électrique voisin, dont la largeur diminue, dans lequel dans un stade de procédé venant ensuite, on imprime, entre le premier conducteur (3') électrique et le deuxième conducteur (3'') électrique, le corps intermédiaire, dont la largeur augmente.

10. Procédé suivant la revendication 8 ou 9, dans lequel on imprime les conducteurs (3, 3', 3", 3‴) électriques et/ou les corps (4, 4', 4", 4‴) intermédiaires sur un corps (6) ondulé.

11. Procédé suivant l'une des revendications 8 à 10, dans lequel entre une impression d'au moins une partie de l'un des conducteurs (3, 3', 3", 3‴) électriques, qui sont un premier objet imprimé, et l'impression d'au moins une partie des corps (4, 4', 4", 4‴) intermédiaires, qui sont un deuxième objet imprimé, on alterne de façon à obtenir, avant un changement, une augmentation de la hauteur radiale du conducteur (3, 3', 3'', 3 ' ' ') électrique ou du corps (4, 4', 4", 4‴) intermédiaire, qui est comprise entre supérieure ou égale à 50% et inférieur ou égale à 200% de la croissance en hauteur, qui s'ensuit, de respectivement l'autre objet imprimé.

12. Procédé suivant l'un des revendications 8 à 11, dans lequel on traite par la chaleur la partie (1) active.

13. Procédé suivant l'une des revendications 8 à 12, dans lequel on fabrique une partie (1) active suivant l'une des revendications 1 à 7.
